# EUROPEAN PATENT APPLICATION

(11) **EP 2 138 683 A1**
(43) Date of publication of application: **30.12.2009**
(21) Application number: 09007721.5
(22) Date of filing: 10.06.2009
(51) Int. Cl.: F02B 23/10

(54) **Internal combustion engine and control method therefor**

(30) Priority: 20.06.2008 JP 2008162031
(71) Applicant: Mazda Motor Corporation, Fuchu-cho Aki-gun Hiroshima 730-8670 (JP)
(72) Inventor: Fujikawa, Tatsuya, Aki-gun Hiroshima 730-8670 (JP); Yamakawa, Masahisa, Aki-gun Hiroshima 730-8670 (JP); Nishimoto, Toshiaki, Aki-gun Hiroshima 730-8670 (JP); Yamamoto, Ryo, Aki-gun Hiroshima 730-8670 (JP)
(74) Representative: Müller-Boré & Partner Patentanwälte

(57) **Abstract**

An internal combustion engine is described herein. The engine may include a combustion chamber having a pair of intake ports arranged at one side, and an exhaust port arranged at the other side. The engine may also include a fuel injector configured to inject fuel into said combustion chamber from a side of said intake ports toward a side of said exhaust port, a variable flow restrictor capable of making flow resistance of said second intake port greater than flow resistance of said first intake port, a first spark plug arranged on a ceiling of the chamber and having its spark gap in the proximity of a center portion of said ceiling, and a second spark plug arranged on said ceiling and having its spark gap which is positioned closer to said first intake port in the axial direction of said crankshaft than said first spark plug.

## Description

The present description relates to an internal combustion engine and to a control method therefor. More particularly, the description pertains to a direct-injection spark-ignited internal combustion engine where fuel is directly injected into a combustion chamber of a cylinder, and air-fuel mixture generated from injected fuel is ignited and combusted.

In a direct-injection spark-ignited internal combustion engine (henceforward, this is described as "direct-injection engine" for simplification), typically, an injector is arranged at an intake port side of a peripheral portion of a combustion chamber where thermal load is relatively small and during an operating condition in which a homogeneous combustion is requested, fuel is injected obliquely downward to a top face of a piston, mainly when the piston is moving down in an intake stroke.

Also, in four-valve engines which have been primarily used recently, since a pair of intake ports are provided for each cylinder and an injector is arranged under these intake ports, an intake port is arranged at a relatively steep angle to make space to arrange the intake port. In other words, an intake port is laid out so that it is extending obliquely upward at a relatively steep angle from a ceiling of a combustion chamber.

An example of this type of injector arrangement is shown in Fig. 1 of Japanese Unexamined Patent Application Publication No. 2008-070212.

It is known as a general merit of direct-injection engines that abnormal combustion due to auto-ignition of an air-fuel mixture, etc., can be inhibited since an intake air is cooled by vaporization heat of fuel injected into a combustion chamber of a cylinder. This merit may allow a compression ratio or an expansion ratio of a cylinder to be set to a high value, which results in improving mechanical efficiency of an engine.

Meanwhile, in order to set a compression ratio or an expansion ratio of a cylinder to a geometrically-high value, a volume of the combustion chamber should be relatively small when a piston is located at top dead center. The result is a combustion chamber having a flattened shape. Such a flattened combustion chamber has a disadvantage from the standpoint of increasing fuel economy because it increases flame propagation speed in an earlier combustion stage and shortens the combustion duration.

To address this issue, it has been suggested to strengthen in-cylinder fluxion such as swirl and/or tumble to enhance combustion by turbulent flow that remains in a combustion chamber on ignition. To implement this approach, it is desirable to maintain in-cylinder fluxion until ignition timing. Particularly, enhancing swirl flow is more advantageous because swirl flow is circling along a peripheral wall of a cylinder and is easy to be maintained for relatively longer duration while tumble flow breaks down easily by the piston moving up in the compression stroke.

Further, it is a well known technology to provide a pair of intake ports with each cylinder and to close one of the intake ports and take in intake air from only the other of the intake ports to enhance swirl flow. Specifically, this technology has a throttle valve arranged in an intake passage communicating with one of the intake ports, and includes closing the throttle valve during low engine load or low engine speed conditions where relatively low flow rate is needed.

However, in direct-injection engines, an intake port must be arranged at a relatively steep angle to make space to arrange the intake port, as described above. Accordingly, a tumble component of the flow tends to be stronger in an intake air flow passing from the intake port toward a combustion chamber. Therefore, even when one of the intake ports is closed by the throttle valve so that intake air may be passing through only the other of the intake ports, a fluxion generated within a cylinder will become a so-called "oblique swirl" that has a large tumble ratio.

To be specific, an air flow entering from only one of the intake ports that is opened when a cylinder is operating in an intake stroke is circling around a center of a cylinder axis while it spirals down along the cylinder axis, as if the flow is chasing after a piston that is moving downward in the intake stroke. Then, when piston speed is decreased, the air flow is oriented upward along a top surface of the piston. As a result, the air flow is circling while being oriented downward at a side of one of the intake ports and oriented upward at a side of the other intake port.

An object of the present description is to sufficiently shorten a total combustion duration, and to enhance heat efficiency to thereby improve fuel economy.

This object is solved according to the invention by the features of the independent claims. Preferred embodiments of the invention are subject of the dependent claims.

Accordingly, a total combustion duration is sufficiently shortened and heat efficiency is enhanced thereby improving fuel economy by enhancing combustion, in a portion of the flow where a swirl flow is broken at a relatively early timing in the compression stroke, when swirl flow in a cylinder in a direct-injection engine is strengthened, to thereby enhance combustion and improve fuel economy. The inventors herein have carefully monitored a process of breaking the "oblique swirl" largely inclining against the cylinder axis described above and of changing a turbulent flow in a compression stroke of a cylinder. As a result, the inventors have recognized that swirl flow is broken earlier by the moving up of a piston at a portion of the combustion chamber where swirl flow orients obliquely downward while a swirl flow may be maintained at a portion of the combustion chamber where swirl flow orients obliquely upward.

In the present description, in order to achieve the object described above, a direct-injection engine has a second ignition plug for providing supplemental spark to the air-fuel mixture, where the second ignition plug is arranged at a portion of the combustion chamber where "oblique swirl" is broken at a relatively early timing and where it is difficult to receive a combustion enhancement effect by turbulent flow.

One aspect of the present description includes an internal combustion engine comprising: a combustion chamber having a pair of first and second intake ports which open at its ceiling, said pair of intake ports being arranged at one side of a crankshaft of said engine and substantially aligned in an axial direction of said crankshaft, and an exhaust port being arranged at the other side of said crankshaft; a fuel injector configured to directly inject fuel into said combustion chamber from a side of said intake ports toward a side of said exhaust port; a variable flow restrictor capable of making flow resistance of said second intake port greater than flow resistance of said first intake port; a first spark plug arranged on said ceiling and having its spark gap in the proximity of a center portion of said ceiling; and a second spark plug arranged on said ceiling and having its spark gap which is positioned closer to said first intake port in the axial direction of said crankshaft than said first spark plug.

This internal combustion engine overcomes at least some of the disadvantages referenced above.

Specifically, when a flow resistance of a second intake port is made larger than a flow resistance of said first intake port by a variable flow restrictor to strengthen swirl flow in a cylinder at a predetermined operating condition of a direct-injection engine having components described above, intake air flow entering from a first intake port to a combustion chamber is enhanced. As a result, this strengthened intake air flow generates a swirl flow circling along a peripheral wall of a cylinder.

But, in a conventional direct-injection engine, since a tumble component of an intake air flow tends to be stronger as described above, the swirl flow will become an "oblique swirl" that is inclined largely against a cylinder axis. Therefore, a breakup of the "oblique swirl" is retarded at a portion of the combustion chamber closer to a second intake port where the "oblique swirl" orients obliquely upward while a breakup of the "oblique swirl" is advanced at a portion of the combustion chamber closer to a first intake port where the "oblique swirl" orients obliquely downward, which results in increasing depression of turbulence before ignition timing.

On the contrary, the direct-injection engine of the present description has a first ignition plug arranged at a general portion of a center of a combustion chamber and an additional second ignition plug at a portion which is closer to first intake port where a depression of turbulence is relatively large, and where it is difficult to receive a combustion enhancement effect by the turbulence. By igniting an air-fuel mixture with this second ignition plug and enhancing combustion, a total combustion duration can be effectively shortened and fuel economy is improved.

In an example embodiment, the internal combustion engine further comprises an ignition controller configured to make a spark at said second spark plug substantially simultaneous with, or later in an engine cycle than, a spark at said first spark plug. In this way, a total combustion duration can be more effectively shortened and fuel economy is improved.

In one example embodiment, the variable flow restrictor includes a valve arranged in said second intake port or in a passage in communication with the second intake port. By this arrangement, swirl flow can be strengthened with a simple configuration. Further, instead of providing the throttle valve, stopping a lift of an intake valve for the second intake port or reducing the lift of the second intake port can be applied to achieve a similar effect.

In another example embodiment considering thermal load, a fuel injector may be arranged below and between the first and second intake ports.

Further, in the case of a four-valve engine, the engine may include a pair of exhaust ports for each cylinder, wherein these exhaust ports are aligned in the axial direction of a crankshaft, and wherein a second spark plug has its spark gap positioned between one of the intake ports and one of said exhaust ports, which are adjacent to each other in the circumferential direction of a cylinder of a combustion chamber.

One aspect of the present description includes a method of controlling an internal combustion in an internal combustion engine, in particular according to the above aspect of the present description, comprising the following steps: providing a combustion chamber having a pair of first and second intake ports which open at a ceiling of the combustion chamber, said pair of intake ports being arranged at one side of a crankshaft of said engine and substantially aligned in an axial direction of said crankshaft, and an exhaust port being arranged at the other side of said crankshaft; directly injecting fuel into said combustion chamber from a side of said intake ports toward a side of said exhaust port; making a flow resistance of said second intake port greater than a flow resistance of said first intake port; arranging a first spark plug on said ceiling and having its spark gap in the proximity of a center portion of said ceiling; and arranging a second spark plug on said ceiling and having its spark gap positioned closer to said first intake port in the axial direction of said crankshaft than said first spark plug.

In an example embodiment, the flow resistance of said second intake port is varied by means of a valve arranged in said second intake port or in a passage in communication with the second intake port.

In an example embodiment, the fuel is injected below said first and second intake ports.

In an example embodiment, the exhaust port is one of a pair of exhaust ports of said combustion chamber, the pair of exhaust ports being aligned in the axial direction of said crankshaft, and wherein said second spark plug has its spark gap positioned between one of said intake ports and one of said exhaust ports, which are adjacent to each other in the circumferential direction of a cylinder of said combustion chamber.

In an example embodiment, the method further comprises generating a spark at said second spark plug substantially simultaneous with, or later in an engine cycle than, a spark at said first spark plug.

The above advantages and other advantages, and features of the present description will be readily apparent from the following Detailed Description when taken alone or in connection with the accompanying drawings. It should be understood that even though embodiments are separately described, single features thereof may be combined to additional embodiments.

Fig. 1 is a schematic view of an in-cylinder direct-injection-type spark-ignition internal combustion engine according to an embodiment of the present invention.

Fig. 2 is a perspective view schematically showing a configuration of a combustion chamber inside an engine cylinder.

Fig. 3 is a schematic view showing a communicating state of an intake passage to a cylinder.

Fig. 4 is a view showing an outline of a control map of the engine.

Fig. 5 is a view corresponding to Fig. 2, showing a spiral flow occurring in the cylinder.

Fig. 6 is a view showing a result of Computational Fluid Dynamics (CFD) after examining a flow field inside the cylinder in a compression stroke.

Fig. 7 is a view showing a result of Computational Fluid Dynamics (CFD) after examining the flow field in the vicinity of an ignition plug after the mid stage of the compression stroke.

Hereinafter, embodiments of the present invention will be described in detail based on the figures. Note that the following description is merely an illustration of a preferred embodiment and is not intended to limit the application or the use of the invention.

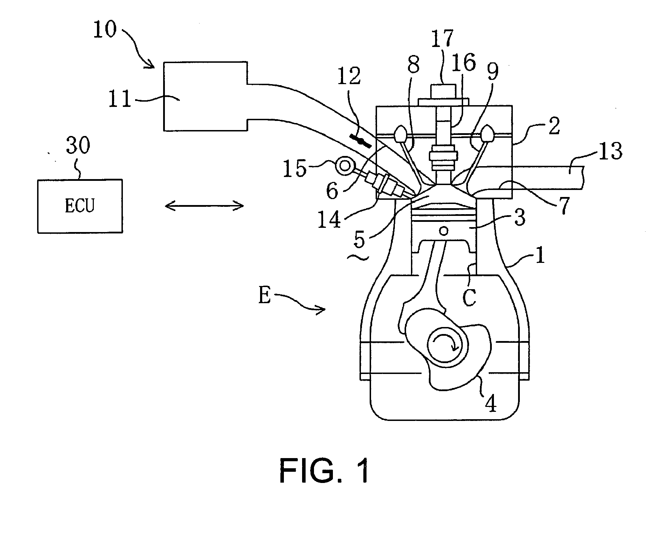

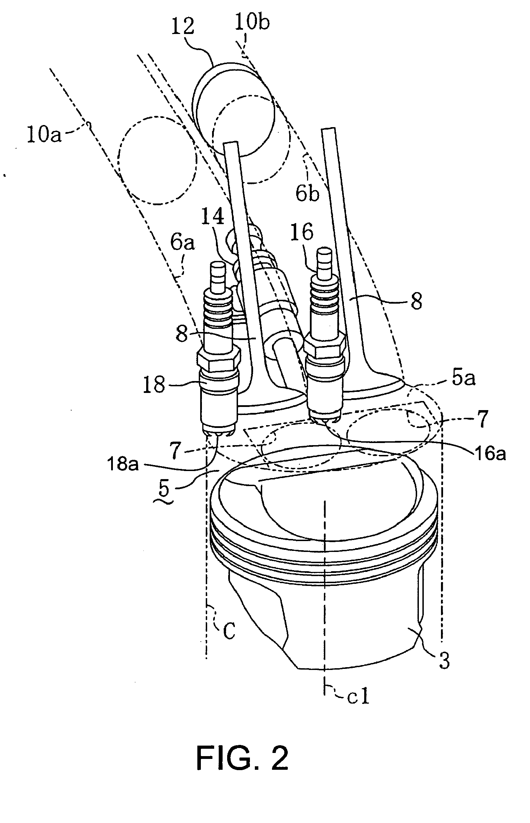

Fig. 1 is a schematic view of a direct-fuel-injection-type engine E (in-cylinder direct-injection-type spark-ignition engine). The engine E includes a cylinder block 1 and a cylinder head 2 mounted onto or to the cylinder block 1. A plurality of cylinders C (four cylinders in this embodiment) are formed inside the cylinder block 1 (only one cylinder C is shown in Fig. 1). A piston 3 is accommodated in each of the cylinders C so that the piston 3 (preferably substantially vertically) reciprocates along a center axis c1 (see Fig. 2) of the cylinder C. These pistons 3 are at least partly arranged in a lengthwise direction of a crankshaft 4 (crankshaft direction) and are connected to the crankshaft 4 by respective connecting rods. The crankshaft 4 is rotatably supported preferably substantially at or near a bottom portion of the cylinder block 1.

As shown in Fig. 2, a combustion chamber 5 is formed or defined inside each of the cylinders C above the piston 3 that reciprocates inside the cylinder C, and a ceiling portion 5a of the combustion chamber 5 is configured preferably by a depression formed inside the cylinder C on a lower surface of the cylinder head 2 (the cylinder head 2 is not shown in Fig. 2). In this embodiment, the ceiling portion 5a of the combustion chamber 5 preferably is formed in a substantially triangular roof constituted with two slope faces on the intake side and the exhaust side, respectively. That is, the combustion chamber 5 is formed with a so-called pentroof-type.

The two slope faces of the ceiling portion 5a are respectively formed with one or more intake ports 6 (6a and 6b) that introduce air into the combustion chamber 5 and one or more exhaust ports 7 that discharge burnt gas (exhaust gas). In this embodiment, two intake valves 8 and two exhaust valves 9 (only one valve for each is shown in Fig. 1 and only the intake valves 8 are shown in Fig. 2) are arranged in each of the combustion chamber 5 to be opened and closed at a specified (predetermined or predeterminable) timing. As shown in Fig. 2, on the backside (in this figure) slope face, first intake port 6a and second intake port and 6b are arranged substantially side by side, that is, in the crankshaft direction, and on the opposite-side slope, two exhaust ports 7 (first exhaust port 7a and second exhaust port 7b not shown in Fig. 2) are arranged substantially side by side in the crankshaft direction similarly (only the opening portions on the front side are shown in this figure).

Also shown in Fig. 1, as typical for the direct-fuel-injection-type engine, the intake ports 6 (6a and 6b) are arranged so that they extend diagonally upward from the ceiling portion 5a (see Fig. 2) of the combustion chamber 5 at a relatively steep angle. That is, the intake ports 6 (6a and 6b) are arranged almost standing. Below the intake ports 6 (6a and 6b), a space for a fuel injector 14 that is arranged as described later is secured. The intake ports 6 (6a and 6b) preferably are arranged at the edge on the intake side in order to reduce a heat load to the fuel injector 14.

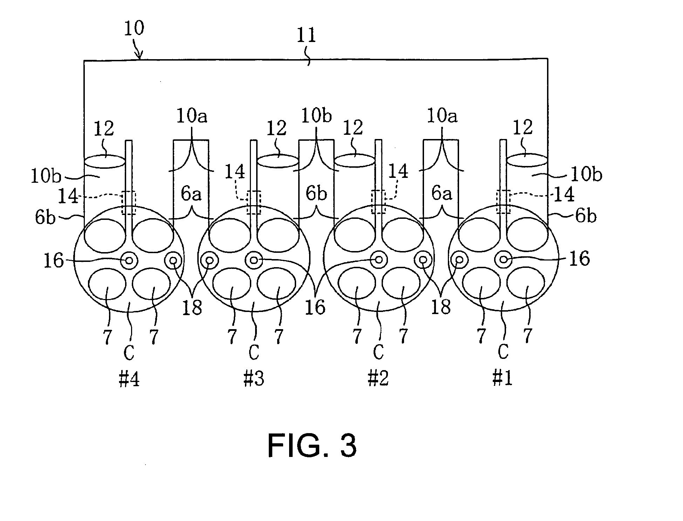

The intake ports 6 (6a and 6b) extended upward diagonally are opened in a side face of the cylinder head 2 independently of each other, and as shown in Fig. 1 and Fig. 3, the intake ports 6 (6a and 6b) are at least partly connected to an intake passage 10. Fig. 3 shows a communicating state of the intake passage 10 to the plurality of cylinders C (four cylinders #1 to #4 in this example) of the engine E. In this example, the cylinders C and a surge tank 11 are connected by branched passages 10a and 10b of each of the intake ports 6a and 6b.

In one of the branched passages 10a and 10b of each cylinder C (in this example, the branched passage 10b that is communicating with the second intake port 6b on the right side of #1 and #3 cylinders C shown in Fig. 2), a control valve 12 (Tumble Swirl Control Valve; hereinafter abbreviated as TSCV) is arranged to control a flow of air-fuel mixture inside the cylinder C as described later. This TSCV valve 12 is formed by, for example, a butterfly valve (throttle valve), and by adjusting its opening position, a flow passage area of the second intake port 6b is changed.

In this embodiment, the TSCV 12 is controlled by an ECU 30 as described later, and by fully closing the second intake port 6b during a specified (predetermined or predeterminable) operating state of the engine E, intake air flows into the combustion chamber 5 only from the first intake port 6a to generate a swirl flow of the air-fuel mixture. In other words, by using the TSCV 12 and the ECU 30, a flow resistance in the second intake port 6b is made variable (preferably greater compared to that in the first intake port 6a), to configure a variable flow restrictor capable of strengthening the swirl flow inside the combustion chamber 5.

Note that, as shown in Fig. 3, in this embodiment, the TSCVs 12 are arranged in the intake ports 6b on the front side of the engine E in the #1 and #3 cylinders C, respectively. Similarly, the TSCVs 12 are arranged in the intake ports 6b on the rear side of the engine E in the #2 and #4 cylinders C, respectively.

As described above, opposed to the pair of intake ports 6a and 6b arranged independently, the exhaust ports 7 of each cylinder C preferably are joined together after extending diagonally upward from the slope face of the ceiling portion 5a of the combustion chamber 5 on the exhaust side (only shown in Fig. 1). After that, the joined exhaust port 7 extends approximately horizontally as illustrated in Fig. 1, and then opens into a side face of the cylinder head 2 on the exhaust side. To the side face on the exhaust side, an exhaust manifold 13 is connected so that it is branched for each cylinder C to communicate with the exhaust ports 7. The exhaust manifold 13 discharges therethrough the burnt gas (exhaust gas) from the combustion chambers, such as combustion chamber 5.

Further, as described above, below the pair of independently arranged intake ports 6a and 6b, the fuel injector 14 or fuel injection valve (there are four fuel injectors 14 in this embodiment as illustrated in Fig. 3 for each cylinder C) is arranged such that it faces its injection opening at the center position between the intake ports 6a and 6b, and injects fuel therefrom toward approximately the center portion of the combustion chamber 5 (that is, toward the exhaust side). The fuel injector 14 is at least partly accommodated in a fuel-injector accommodating hole formed in the cylinder head 2. The proximal end portion of the fuel injector 14 is connected to a fuel supply system (preferably having a high-pressure fuel pump or a high-pressure regulator, both are not shown) through a fuel distribution pipe 15 (only shown in Fig. 1). The fuel injector 14 is configured to be controlled to inject fuel into the combustion chamber 5 during an intake stroke of the engine E.

Further, as shown in Fig. 2, in the cylinder head 2 (as labeled in Fig. 1), a first spark plug 16 is arranged for each cylinder C so as to extend along the cylinder axis c1. An electrode 16a provided at the tip end of the first spark plug 16 faces the combustion chamber 5 preferably substantially at or near the center of the ceiling portion 5a as is often the case with four-valve engines. On the other hand, on the proximal end side of the first spark plug 16, an ignition coil unit 17 (only shown in Fig. 1) is arranged so that it conducts electric current to the first spark plug 16 of each cylinder C at a specified (predetermined or predeterminable) timing.

In addition, in this embodiment, a second spark plug 18 (only shown in Fig. 2) is arranged so that it faces the combustion chamber 5 substantially between the first intake port 6a and the first exhaust port 7 on the left side in Fig. 2 (that is, between the opening portions of the intake port 6a and the exhaust port adjacent to intake port 6a in the circumferential direction of the cylinder C). Although illustration is omitted, an ignition coil unit is also connected to the second spark plug 18 on the proximal end side.

This arrangement of the second spark plug 18 preferably is such that, in other words, its electrode 18a substantially faces the combustion chamber 5 from a position closer to the first intake port 6a than the first spark plug 16 in the crankshaft direction. As described in detail below, when the TSCV 12 is at least partly, preferably substantially fully closed during a predetermined operating condition of the engine E to strengthen the swirl flow and promote combustion, the swirl flow may break up relatively early, and it may be difficult to obtain a sufficient combustion promotion effect. Accordingly, the arrangement described above can aid to supplementarily ignite an air-fuel mixture.

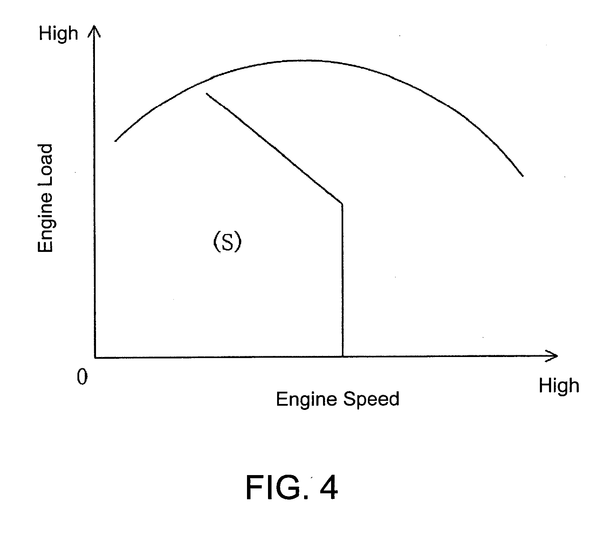

In the direct-fuel-injection-type engine E of this embodiment, the opening and closing operations of the TSCV 12, the fuel injection using the fuel injector 14, and the ignition using the first and second spark plugs 16 and 18, etc. are controlled by the engine control unit (ECU) 30. For example, as schematically shown in Fig. 4, the TSCV 12 is closed in an operating range (S) of the engine E on a relatively lower speed side to strengthen an "oblique swirl flow" (see below), and thereby attempts to promote combustion and shorten combustion duration.

In the illustrated example, an upper limit of the lower-speed operating range (S) is sectioned by a borderline (a bent straight line) to limit an engine load to be higher only for the lower engine speeds. For example, when the engine speed is 2,000 rpm or less, the TSCV 12 is closed even if a full load is applied to strengthen the swirl flow. On the other hand, in a higher engine speed range, the TSCV 12 is fully opened regardless of the engine load condition to enhance a filling efficiency into the cylinder C.

The combustion in the lower-speed operating range (S) is described in more detail below. In this range, because the TSCV 12 of the second intake port 6b preferably is fully closed to strengthen the swirl flow, intake air flows into the combustion chamber 5 substantially only through the first intake port 6a and circles largely along a peripheral wall of the cylinder C. However, as described above, because the intake ports 6a and 6b are arranged at a relatively steep angle, the intake air flow includes a relatively strong tumble flow component, and thereby forms a so-called "oblique swirl flow."

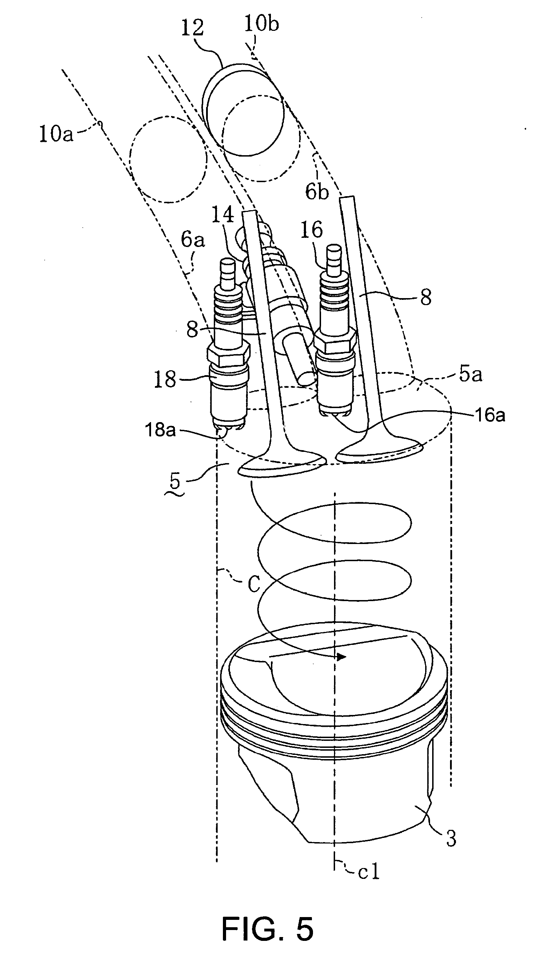

More specifically, first, as shown in Fig. 5, even when the intake valves 8 are opened in an intake stroke of the cylinder C, intake air does not flow through the closed second intake port 6b of the TSCV 12. Rather, the intake air flows into the combustion chamber 5 only from the first intake port 6a. This intake air flow circles substantially around the cylinder center axis c1 to chase after the piston 3 which is moving down and, thus, it substantially flows spirally downward, as indicated by an arrow in the figure.

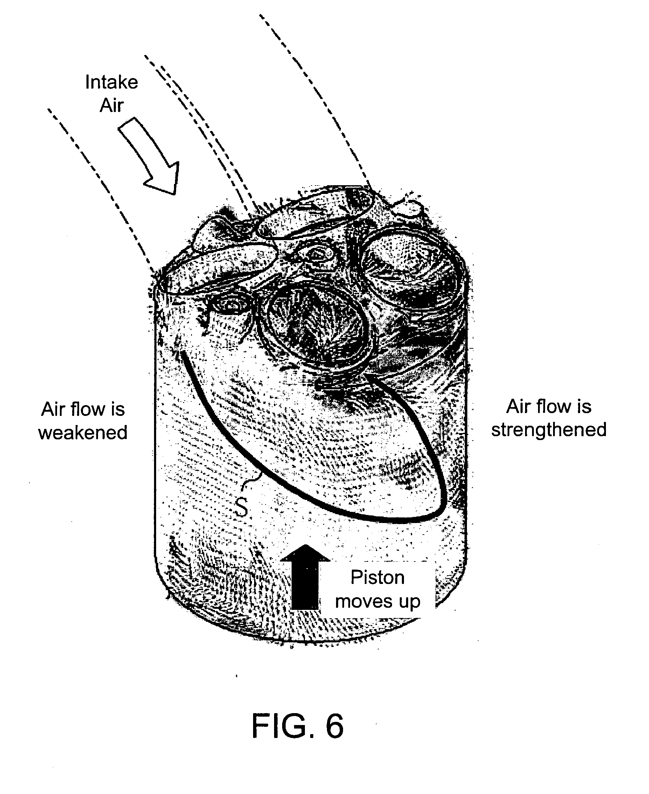

Then, as the piston 3 approaches the bottom dead center and the lowering speed of the piston 3 decreases, the air flow is directed upward along a top surface of the piston 3. In a compression stroke of the cylinder C where the fuel injection from the fuel injector 14 has been finished, the so-called oblique swirl flow is formed as shown in Fig. 6 in which a flow of the air-fuel mixture of the intake air and the injected fuel is directed diagonally downward closer to the first intake port 6a, while it is directed diagonally upward closer to the second intake port 6b. Note that Fig. 6 illustrates a flow field inside of the cylinder C which is simulated by CFD (Computational Fluid Dynamics), and the oblique swirl flow is schematically indicated using an arrow.

The oblique swirl flow described above is such that, as illustrated, it circles along the peripheral wall of the cylinder C in a big circle, and it is maintained until it reaches around an ignition timing without breaking up in a compression stroke, like the tumble flow. In more detail, responding to an upward flow generated by the rising piston 3, the breakup of the oblique swirl flow is delayed to occur closer to the second intake port 6b where the oblique swirl flow flows obliquely upward, while the breakup of the oblique swirl flow is advanced to occur closer to the first intake port 6a where the oblique swirl flow flows obliquely downward.

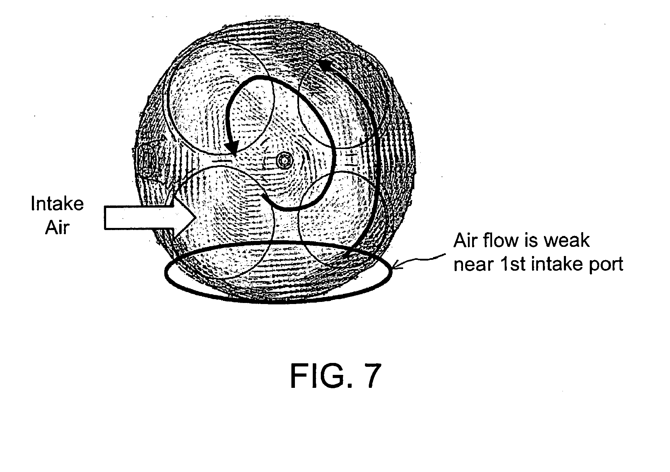

Fig. 7 shows an examination result of the flow field after the mid stage of a compression stroke. This illustration shows a lateral cross-section inside the cylinder C in the vicinity of the electrode 16a of the first spark plug 16. From a velocity distribution of the flow in the crankshaft direction (an into the page direction in this figure), it can be understood that the velocity of flow is relatively slower in a portion closer to the first intake port 6b on the lower left side in this figure and, thus, the breakup of the flow will be faster. Therefore, where the breakup of the oblique swirl flow is faster, because an attenuation of the turbulence thereafter will be faster, the effects of combustion promotion will be lowered. Thus, the combustion duration cannot be shortened for the entire combustion chamber 5.

Regarding this point of view, in this embodiment, the second spark plug 18 preferably is arranged closer to the first intake port 6a where the attenuation of the turbulence is faster as described above. With this configuration, the air-fuel mixture is ignited at a specified (predetermined or predeterminable) timing to promote the combustion, and thereby effectively shortens the combustion duration or period of time for combustion for the entire combustion chamber 5. In this embodiment, the ECU 30 controls, in accordance with the engine load and the engine speed, so that the ignition timing of the second spark plug 18 occurs at substantially the same timing as that of the first spark plug 16 or at a slightly retarded timing therefrom. In other words, the ECU 30 also constitutes or forms part of an ignition control module.

As described above, the breakup of the oblique swirl flow in a compression stroke is faster in a portion closer to the first intake port where the oblique swirl flow flows obliquely downward in the combustion chamber 5 of the cylinder C and, thus, it is difficult to obtain the promotion effect of combustion by turbulence. Therefore, the direct-fuel-injection-type engine E of this embodiment (in-cylinder direct-injection spark-ignition internal combustion engine) focuses on this point and it is configured such that an air-fuel mixture is supplementarily ignited by the second spark plug 18 that is provided at the corresponding second spark plug location. Therefore, the combustion duration, or period of time, can be effectively shortened for the entire combustion chamber 5 and, thus, fuel consumption can be improved.

Note that the configuration of the present invention is not limited to the embodiment described above and other configurations may be made within the scope of the invention as well. For example, the TSCV is not necessarily provided to strengthen the swirl flow, and instead, it may be configured such that a lift of the intake valve 8 of the second intake port 6b may be stopped or reduced.

Further, the TSCV 12 may be provided in the second intake port 6b that communicates with the branched passage 10b, instead of providing the TSCV 12 directly in the branched passage 10b. Further, the TSCV 12 is not necessarily closed in the lower-speed operating range (S) shown in the map of Fig. 4 to generate the oblique swirl flow and it may be slightly, or partially, closed to increase the flow resistance.

The lower-speed operating range (S) where the oblique swirl flow is generated is not limited to that shown in the map of Fig. 4. For example, the TSCV 12 may be opened in a full-load state or a predetermined high-load state even when engine speed is below 2,000 rpm.

Further, the direct-fuel-injection-type engine to which the present invention is applied is not limited to the four-valve type as described in this embodiment, and it may be a three-valve engine having a single exhaust port. In this case, the second spark plug 18 does not have to face the peripheral portion of the combustion chamber 5 as described in this embodiment and rather, it may be arranged closer to the center of the combustion chamber 5.

Similarly, the fuel injector 14 does not have to be arranged below the first and second intake ports 6a and 6b and at the middle position as described in this embodiment, and it may be arranged at an offset downward from the first intake port 6a, for example. Accordingly, the engine may include a combustion chamber having a pair of intake ports arranged at one side, and an exhaust port arranged at the other side. The engine may also include a fuel injector configured to inject fuel into said combustion chamber from a side of said intake ports toward a side of said exhaust port, a variable flow restrictor capable of (controllably) making flow resistance of said second intake port greater than flow resistance of said first intake port, a first spark plug arranged on a ceiling of the chamber and having its spark gap in the proximity of a center portion of said ceiling, and a second spark plug arranged on said ceiling and having its spark gap which is positioned closer to said first intake port in the axial direction of said crankshaft than said first spark plug.

It should be understood that the embodiments herein are illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. An internal combustion engine (E) comprising:
a combustion chamber (5) having a pair of first and second intake ports (10a, 10b) which open at a ceiling (5a) of the combustion chamber (5), said pair of intake ports (10a, 10b) being arranged at one side of a crankshaft (4) of said engine (E) and substantially aligned in an axial direction of said crankshaft (4), and an exhaust port (13) being arranged at the other side of said crankshaft (4);
a fuel injector (14) configured to directly inject fuel into said combustion chamber (5) from a side of said intake ports (10a, 10b) toward a side of said exhaust port (13);
a variable flow restrictor (12) capable of making a flow resistance of said second intake port (10b) greater than a flow resistance of said first intake port (10a);
a first spark plug (16) arranged on said ceiling (5a) and having its spark gap (16a) in the proximity of a center portion of said ceiling; and
a second spark plug (18) arranged on said ceiling (5a) and having its spark gap (18a) positioned closer to said first intake port (10a) in the axial direction of said crankshaft (4) than said first spark plug (16).

2. The internal combustion engine of claim 1, wherein said variable flow restrictor (12) includes a valve arranged in said second intake port (10b) or in a passage in communication with the second intake port (10b).

3. The internal combustion engine of claim 1 or 2, wherein said fuel injector (14) is arranged below said first and second intake ports (10a, 10b).

4. The internal combustion engine of any one of the preceding claims, wherein the exhaust port (13) is one of a pair of exhaust ports of said combustion chamber (5), the pair of exhaust ports being aligned in the axial direction of said crankshaft (4), and wherein said second spark plug (18) has its spark gap (18a) positioned between one of said intake ports (10a) and one of said exhaust ports (12), which are adjacent to each other in the circumferential direction of a cylinder of said combustion chamber (5).

5. The internal combustion engine of any one of the preceding claims, further comprising an ignition controller (30) configured to make a spark at said second spark plug (18) substantially simultaneous with, or later in an engine cycle than, a spark at said first spark plug (16).

6. A method of controlling an internal combustion in an internal combustion engine (E) comprising the following steps:
providing a combustion chamber (5) having a pair of first and second intake ports (10a, 10b) which open at a ceiling (5a) of the combustion chamber (5), said pair of intake ports (10a, 10b) being arranged at one side of a crankshaft (4) of said engine (E) and substantially aligned in an axial direction of said crankshaft (4), and an exhaust port (13) being arranged at the other side of said crankshaft (4);
directly injecting fuel into said combustion chamber (5) from a side of said intake ports (10a, 10b) toward a side of said exhaust port (13);
making a flow resistance of said second intake port (10b) greater than a flow resistance of said first intake port (10a);
arranging a first spark plug (16) on said ceiling (5a) and having its spark gap (16a) in the proximity of a center portion of said ceiling; and
arranging a second spark plug (18) on said ceiling (5a) and having its spark gap (18a) positioned closer to said first intake port (10a) in the axial direction of said crankshaft (4) than said first spark plug (16).

7. The method of claim 6, wherein the flow resistance of said second intake port (10b) is varied by means of a valve arranged in said second intake port (10b) or in a passage in communication with the second intake port (10b).

8. The method of claim 6 or 7, wherein the fuel is injected below said first and second intake ports (10a, 10b).

9. The method of any one of the preceding claims 6 to 8, wherein the exhaust port (13) is one of a pair of exhaust ports of said combustion chamber (5), the pair of exhaust ports being aligned in the axial direction of said crankshaft (4), and wherein said second spark plug (18) has its spark gap (18a) positioned between one of said intake ports (10a) and one of said exhaust ports (12), which are adjacent to each other in the circumferential direction of a cylinder of said combustion chamber (5).

10. The method of any one of the preceding claims 6 to 9, further comprising generating a spark at said second spark plug (18) substantially simultaneous with, or later in an engine cycle than, a spark at said first spark plug (16).
